# EUROPÄISCHE PATENTSCHRIFT

(11) **EP 1 785 535 B1**
(45) Veröffentlichungstag und Bekanntmachung des Hinweises auf die Patenterteilung: **21.09.2011**
(21) Anmeldenummer: 06023319.4
(22) Anmeldetag: 09.11.2006
(51) Int. Cl.: E04B 1/26, F16B 12/22

(54) **Verbindungsbeschlag und Verfahren zum Verbinden eines Holzträgers mit einer Tragstruktur aus Holz**
Connecting device and method for connecting a wooden beam with a wooden supporting structure
Dispositif et procédé pour la connexion d'une poutre en bois avec une structure support en bois

(30) Priorität: 10.11.2005 CH 18002005
(43) Veröffentlichungstag der Anmeldung: 16.05.2007
(73) Patentinhaber: Glaromat AG, 8867 Niederurnen (CH)
(72) Erfinder: Steinmann, Stefan, 8864 Reichenburg (CH)
(74) Vertreter: Sutter, Kurt

(56) Entgegenhaltungen:
- EP-A2- 0 866 186
- DE-U1- 8 808 226
- DE-U1- 8 812 680

## Beschreibung

Die vorliegende Erfindung betrifft ein Verfahren zum stirnseitigen Verbinden eines Holzträgers mit einer Tragstruktur aus Holz, einen Verbindungsbeschlag zum Verbinden eines Holzträgers mit einer Tragstruktur aus Holz gemäss dem Verfahren, eine Verbindung zwischen einem Holzträger und einer Tragstruktur aus Holz herstellbar oder hergestellt mit dem Verfahren sowie eine Anwendung des Verfahrens zum Verbinden eines Holzträgers mit einer Tragstruktur aus Holz gemäss den Oberbegriffen der unabhängigen Patentansprüche.

Im Holzbau ist es vielfach erforderlich, Holzträger stirnseitig mit einer Tragstruktur, wie beispielsweise einem Hauptträger, zu einem Tragverbund zu verbinden. Dieses kann gemäss dem Stand der Technik auf verschiedene Arten erfolgen.

Die klassische Methode zum stirnseitigen Verbinden eines Holzträgers mit einer Tragstruktur ist die sogenannten "Zapfenmethode", bei welcher an der Stirnfläche des Holzträgers ein Zapfen ausgebildet wird, welcher in eine entsprechende Ausnehmung in der Tragstruktur eingesteckt wird und gegebenenfalls mit einem Nagel oder Holzdübel axial gesichert wird. Diese Methode ist jedoch arbeitsintensiv und daher teuer und führt in den meisten Fällen infolge Schrumpfung des Holzes zu offenen Verbindungsspalten, so dass sich diese Methode nur bedingt für sichtbare Konstruktionen im Wohnbereich eignet.

Im modernen Holzbau erfolgt die stirnseitige Anbindung von Holzträgern zumeist mittels einfacher Blechbeschläge, wie z.B. Blechwinkel oder Balkenschuhe, welche den Vorteil aufweisen, dass sie kostengünstig und einfach zu installieren sind und zudem eine definierte Tragfähigkeit aufweisen. Indes weisen diese Lösungen jedoch den Nachteil auf, dass sie wenig dekorativ sind und sich deshalb für sichtbare Konstruktionen im Wohnbereich wenig eignen.

Auch ist es heute bekannt, bei hochwertigen Sichtkonstruktionen das stirnseitige Anschliessen von Holzträgern unsichtbar mittels spezieller zweiteiliger Verbindungsbeschläge vorzunehmen, von denen je eine Beschlagskomponente an der Tragstruktur und eine an der Stirnfläche des zu befestigenden Holzträgers befestigt wird und der Holzträger sodann durch Einhängen der an ihm befestigten Beschlagskomponente in die an der Tragstruktur befestigten Beschlagkomponente mit der Tragstruktur verbunden wird. Damit diese Verbindung unsichtbar ist, müssen die Beschlagskomponenten jeweils in die Stirnfläche des Holzträgers und die Anschlussfläche der Tragstruktur eingelassen werden, was gemäss dem Stand der Technik durch Einfräsen einer speziell konturierten Aufnahmeöffnung mit einer Oberfräse und speziellen Frässchablonen bewerkstelligt wird und zumindest beim Abbinden der Konstruktionselemente auf der Baustelle problematisch und zeitaufwendig ist.

DE 88 12 680 U1 offenbart einen stirnseitigen Anschluss eines Balkens an ein diesen tragendes Bauteil. Das tragende Bauteil ist mit einer oberflächenbündig in dessen Anschlussfläche eingelassenen rechteckigen Ankerplatte versehen, welche mittels Schrauben befestigt ist. Die Ankerplatte weist einen nach oben offenen Schlitz auf. Das Ende des Holzbalkens weist einen senkrecht und in Balkenlängsrichtung verlaufenden Schlitz auf, in welchem eine Trägerplatte angeordnet ist. Die Trägerplatte ist mit Stabdübeln, welche den Balken und die Trägerplatte quer zur Balkenlängsrichtung durchsetzen, befestigt. Die Trägerplatte erstreckt sich über die Stirnfläche des Holzbalkens hinaus in den Schlitz der Ankerplatte hinein, an dessen unterem Ende sie mit ihrer Unterseite aufliegt, wobei sie die Ankerplatte mit einem nach unten vorstehenden Vorsprung hintergreift, zur axialen Sicherung des Balkenanschlusses beim Aufliegen der Trägerplatte. Dieser Vorsprung stellt die einzige Sicherung des Balkenanschlusses in axialer Richtung dar und ist insbesondere nicht dafür geeignet, ein Drehmoment um die Horizontale herum zwischen der Trägeplatte und der Ankerplatte zu übertragen. Die seitlichen Bereiche des Schlitzes dienen hier ausschliesslich der Führung der Trägerplatte. Die Stabdübel der Trägerplatte treten an der Balkenaussenseite sichtbar zu Tage, da sie durch den Balken durchgeschlagen sind.

EP 0 866 186 A2, welches als nächstliegender Stand der Technik angesehen wird, offenbart einen stirnseitigen Balkenanschluss, bei welchem sowohl am Holzbalken als an dem diesen tragenden Bauteil jeweils eine rechteckige Verbindungsplatte befestigt ist. Die Verbindungsplatten werden mittels diese durchsetzender Schrauben an der Stirnfläche des Balkens und an der Anschlussfläche des tragenden Bauteils befestigt, wobei es für den Fall, dass eine unsichtbare Verbindung gewünscht wird, vorgesehen ist, in die Anschlussfläche des tragenden Bauteils eine entsprechende rechteckige Ausnehmung einzufräsen, welche dann beide Verbindungsplatten aufnimmt. Die an der Stirnseite des Balkens befestigte Verbindungsplatte weist mehrere schraubenkopfförmige Vorsprünge auf, welche sich in einen oder mehrere Schlitze in der am tragenden Bauteil befestigten Verbindungsplatte hinein erstrecken und den jeweiligen Schlitz mit ihrem Kopfteil hintergreifen. Dabei liegen die zu unterst im Schlitz angeordneten schraubenkopfartigen Vorsprünge mit ihrer Unterseite am unteren Ende des Schlitzes auf und übertragen die gesamten in vertikaler Richtung wirkenden Kräfte sowie axiale Zugkräfte zwischen den Verbindungsplatten. Die übrigen schraubenkopfförmigen Vorsprünge dienen der Führung und der Übertragung von axialen Kräften, übernehmen jedoch keine Tragfunktion in Schwerkraftrichtung. Auch wird ein entsprechender Verbindungsbeschlag mit kreisrunden Verbindungsplatten offenbart.

Es stellt sich die Aufgabe, ein Verfahren und einen Verbindungsbeschlag zum Verbinden eines Holzträgers mit einer Tragstruktur aus Holz zur Verfügung zu stellen, welche die Nachteile des Standes der Technik nicht aufweisen oder diese zumindest teilweise vermeiden.

Diese Aufgabe wird von dem Verfahren und dem Verbindungsbeschlag gemäss den unabhängigen Patentansprüchen gelöst.

Demgemäss betrifft ein erster Aspekt der Erfindung ein Verfahren zum stirnseitigen Befestigen eines Holzträgers an einer Tragstruktur aus Holz mit Hilfe eines Verbindungsbeschlags. Der beim erfindungsgemässen Verfahren zum Einsatz kommende Beschlag umfasst eine erste und eine zweite Beschlagskomponente, wobei jede Beschlagskomponente jeweils einen axial von Befestigungsbohrungen für Befestigungsschrauben oder Befestigungsnägel durchsetzten Grundkörper aufweist. Dabei können die Befestigungsbohrungen exakt axial oder auch schräg durch den Grundkörper verlaufen. Zudem umfasst die erste Beschlagskomponente ein oder mehrere axial von ihrem Grundkörper abstehende Formelemente und die zweite Beschlagskomponente eine Gegenkontur zur Bildung eines Formschlusses in axialer Richtung und in drei von vier radialen Richtungen mit dem Formelement oder den Formelementen der ersten Beschlagskomponente. Dabei sind das Formelement oder die Formelemente der ersten Beschlagskomponente und die Gegenkontur der zweiten Beschlagskomponente derartig ausgebildet, dass der Formschluss durch ein radiales Bewegen der beiden Beschlagskomponenten relativ zueinander herstellbar ist.

Gemäss dem erfindungsgemässen Verfahren wird in der Stirnfläche der zu befestigenden Stirnseite des Holzträgers eine erste kreisrunde Bohrung eingebracht, in welche sodann die erste Beschlagskomponente eingesetzt wird. Die Aussenkontur der ersten Beschlagskomponente und die Tiefe und der Durchmesser der ersten Bohrung sind dabei derartig aufeinander abgestimmt, dass die erste Beschlagskomponente beim axialen Anschlagen im Bohrungsgrund durch die Umfangsbegrenzungen der ersten Bohrung radial zentriert wird und das Formelement der ersten Beschlagskomponente axial über die Stirnfläche des Holzträgers übersteht. Anschliessend wird die so eingesetzte erste Beschlagskomponente in der ersten Bohrung befestigt, indem Befestigungsschrauben und/oder Befestigungsnägel durch die Befestigungsbohrungen in den Grund der ersten Bohrung eingeschraubt und/oder eingeschlagen werden. Dabei ist es denkbar, dieses exakt axial oder auch schräg einzuschrauben oder einzuschlagen. Des Weiteren werden eine zweite kreisrunde Bohrung und mindestens eine weitere kreisrunde Bohrung in eine vertikal orientierte Fläche der Tragstruktur (bei bereits installierter Tragstruktur) oder in eine zur vertikalen Orientierung vorgesehene Fläche der Tragstruktur (bei noch nicht installierter Tragstruktur) eingebracht, und zwar derart, dass sich die zweite und die weiteren Bohrungen in Schwerkraftrichtung bzw. in der Richtung, welche bei der vorgesehenen Einbaulage der Holzstruktur die Schwerkraftrichtung ist (vorgesehene Schwerkraftrichtung), radial überschneiden. Dabei werden die anspruchsgemässen weiteren Bohrungen in Schwerkraftrichtung oder in der vorgesehenen Schwerkraftrichtung oberhalb der anspruchsgemässen zweiten Bohrung angeordnet und derartig eingebracht, dass sie jeweils eine Bohrungstiefe aufweisen, welche mindestens dem axialen Überstand des Formelements oder der Formelemente der ersten Beschlagskomponente über die Stirnseite des Holzträgers entspricht. Sodann wird die zweite Beschlagskomponente in die zweite Bohrung eingesetzt. Dabei sind die Aussenkontur der Beschlagskomponente und die Tiefe und der Durchmesser der Bohrung derartig aufeinander abgestimmt, dass die zweite Beschlagskomponente beim axialen Anschlagen im Grund der zweiten Bohrung durch die Umfangsbegrenzungen dieser Bohrung radial zentriert wird und axial im wesentlichen bündig mit der Oberfläche der Tragstruktur ist oder hinter diese zurückspringt. Zudem wird die zweite Beschlagskomponente, gegebenenfalls nach dem Einsetzen unter einer Verdrehung derselben um die Bohrungsachse herum, derart in der zweiten Bohrung ausgerichtet, dass ein bestimmungsgemässes Zusammenfügen der beiden Beschlagskomponenten durch Bewegen der ersten Beschlagskomponente relativ zur zweiten Beschlagskomponente in Schwerkraftrichtung oder in der vorgesehenen Schwerkraftrichtung erfolgen kann, also von der Richtung her, in welcher die weiteren Bohrungen angeordnet sind. Anschliessend wird die so eingesetzte und ausgerichtete zweite Beschlagskomponente in der zweiten Bohrung befestigt, indem Befestigungsschrauben und/oder Befestigungsnägel durch die Befestigungsbohrungen in den Grund der zweiten Bohrung eingeschraubt und/oder eingeschlagen werden.

Das eigentliche Verbinden von Holzträger und Tragstruktur erfolgt nun dadurch, dass der Holzträger mit der an seiner Stirnseite in der ersten Bohrung befestigten ersten Beschlagkomponente gegenüber der Tragstruktur derartig bewegt wird, dass das Formelement oder die Formelemente der ersten Beschlagskomponente durch eine Relativbewegung in Schwerkraftrichtung bzw. in der vorgesehenen Schwerkraftrichtung gegenüber der zweiten Beschlagskomponente, welche an der Tragstruktur befestigt ist, mit der Gegenkontur der zweiten Beschlagskomponente in Eingriff gebracht wird oder werden, wodurch der Formschluss zwischen den beiden Beschlagskomponenten hergestellt wird. Bei noch nicht installierter Tragstruktur ist es natürlich auch denkbar, dass hierfür die Tragstruktur gegenüber dem Holzträger bewegt wird.

Durch das erfindungsgemässe Verfahren wird es möglich, auf einfache Weise eine zuverlässige unsichtbare Verbindung zwischen der Stirnseite eines Holzträgers und einer Tragstruktur herzustellen, ohne dass teure und empfindliche Spezialmaschinen benötigt werden. Hieraus wiederum ergibt sich der Vorteil, dass solche Verbindungen auch problemlos auf der Baustelle anzufertigen sind.

In einer bevorzugten Ausführungsform des Verfahrens werden die zweite Bohrung und die weiteren Bohrungen derartig in die Fläche der Tragstruktur eingebracht, dass die zwischen diesen gebildeten Überschneidungsbereiche quer zur Schwerkraftrichtung oder zur vorgesehenen Schwerkraftrichtung eine Breite aufweisen, welche mindestens der maximalen Erstreckung des Formelements oder der Formelemente der ersten Beschlagskomponente quer zur vorgesehene Schwerkraftrichtung entspricht. Hierdurch ergibt sich der Vorteil, dass ein Bewegen des oder der Formelemente in den Bohrungen zwecks Herstellung der Verbindung zwischen Holzträger und Tragstruktur ohne einen weiteren Nachbearbeitungsschritt möglich ist.

In einer anderen bevorzugten Ausführungsform des Verfahrens werden die zweite Bohrung und die weiteren Bohrungen derartig in die Fläche der Tragstruktur eingebracht, dass die zwischen diesen gebildeten Überschneidungsbereiche quer zur Schwerkraftrichtung oder zur vorgesehenen Schwerkraftrichtung eine Breite aufweisen, welche kleiner ist als die maximale Erstreckung des Formelements oder der Formelemente der ersten Beschlagskomponente quer zur vorgesehenen Schwerkraftrichtung. Um ein Bewegen des oder der Formelemente in den Bohrungen zwecks Herstellung der Verbindung zwischen Holzträger und Tragstruktur zu ermöglichen, werden bei dieser Ausführungsform die Überschneidungsbereiche vor dem Bewegen des Formelements innerhalb der Bohrungen mittels eines Handwerkzeugs mit einer Klinge, insbesondere mittels eines Stechbeitels, derartig nachbearbeitet, dass sie anschliessend eine Breite aufweisen, welche mindestens der maximalen Erstreckung des Formelements oder der Formelemente der ersten Beschlagskomponente quer zur vorgesehene Schwerkraftrichtung entspricht. Diese Ausführungsform ist insbesondere dann praktikabel, wenn die erste Beschlagskomponente ein besonders breites Formelement oder mehrere in vorgesehener Schwerkraftrichtung gesehen nebeneinander angeordnete Formelemente aufweist.

In einer weiteren bevorzugten Ausführungsform wird die in Schwerkraftrichtung bzw. in der vorgesehenen Schwerkraftrichtung zuoberst angeordnete anspruchsgemässe weitere Bohrung derartig in die Fläche der Tragstruktur eingebracht, dass sie radial nach oben hin geöffnet ist, der Bohrer also bei Herstellen der Bohrung radial aus der Kontur der Tragstruktur austritt, wobei die Öffnung quer zur Schwerkraftrichtung oder zur vorgesehenen Schwerkraftrichtung eine Breite aufweist, welche mindestens der maximalen Erstreckung des Formelements oder der Formelemente der ersten Beschlagskomponente quer zur vorgesehene Schwerkraftrichtung entspricht. Hierdurch ergibt sich der Vorteil, dass das Formelement durch eine rein in Schwerkraftrichtung bzw. in der vorgesehenen Schwerkraftrichtung verlaufende Bewegung in die Bohrungen eingeführt und innerhalb dieser bewegt werden kann zwecks Herstellung der Verbindung zwischen Holzträger und Tragstruktur, und zwar ohne dass hierfür ein weiterer Bearbeitungsschritt nötig wäre.

In einer anderen bevorzugten Ausführungsform wird die zuoberst angeordnete Bohrung ebenfalls derartig eingebracht, dass diese radial nach oben hin geöffnet ist, wobei jedoch die Breite der Öffnung quer zur Schwerkraftrichtung oder zur vorgesehenen Schwerkraftrichtung kleiner ist als die maximale Erstreckung des Formelements oder der Formelemente der ersten Beschlagskomponente quer zur vorgesehene Schwerkraftrichtung. Vor dem Einführen des Formelements oder der Formelemente in die oberste anspruchsgemässe weitere Bohrung wird diese Öffnung dann in einem weiteren Arbeitsschritt mittels eines Handwerkzeugs mit einer Klinge, bevorzugterweise mittels eines Stechbeitels, derartig nachbearbeitet, dass sie eine Breite aufweist, welche zumindest der maximalen Erstreckung des Formelements der ersten Beschlagskomponente quer zur vorgesehene Schwerkraftrichtung entspricht. Dieses Vorgehen ist insbesondere dann praktikabel, wenn die erste Beschlagskomponente ein sehr breites Formelement oder mehrere in vorgesehener Schwerkraftrichtung gesehen nebeneinander angeordnete Formelemente aufweist.

In noch einer weiteren bevorzugten Ausführungsform des Verfahrens, bei welcher eine erste Beschlagskomponente mit einem nicht rotationssymmetrischen Formelement oder mit einer Anordnung aus mehreren Formelementen verwendet wird, erfolgt vorgängig zum Befestigen der ersten Beschlagskomponente in der ersten Bohrung ein Ausrichten derselben in der ersten Bohrung, und zwar derartig, dass ein bestimmungsgemässes Zusammenfügen der beiden Beschlagskomponenten des Verbindungsbeschlags durch Bewegen der zweiten Beschlagskomponente relativ zur ersten Beschlagskomponente in einer Richtung parallel zur Stirnfläche des Holzträgers und entgegen der Richtung, welche bei der vorgesehenen Einbaulage des Holzträgers die Schwerkraftrichtung ist, möglich ist. Hierdurch wird sichergestellt, dass Formelement und Gegenkontur einwandfrei ineinandergreifen können.

Sind die Bohrungsdurchmesser der ersten und der zweiten Bohrung und mit Vorteil zudem auch der anspruchsgemässen weiteren Bohrungen identisch, was bevorzugt ist, so wird zur Herstellung der Verbindung ein einziger Bohrer benötigt. Dies ist sowohl vom Arbeitsablauf als auch von den Investitionskosten her von Vorteil.

Ebenfalls bevorzugt ist es, wenn die erste und die zweite Bohrung und bevorzugterweise auch die anspruchsgemässen weiteren Bohrungen die gleiche Bohrungstiefe aufweisen, da so für alle Bohrungen ein fester Tiefenanschlag vorgesehen werden kann. Hierdurch können die Genauigkeit gesteigert und Fehlerquellen eliminiert werden.

Bei weiteren bevorzugten Verfahren wird als Tragstruktur ein weiterer Holzträger verwendet, in welchen die zweite und die weiteren Bohrungen bevorzugterweise quer zur Faserrichtung eingebracht werden. Dabei wird der anspruchsgemässe Holzträger derartig mit dem anspruchsgemässen weiteren Holzträger verbunden, dass die Oberseiten und/oder die Unterseiten der beiden Holzträger im wesentlichen oberflächenbündig sind. Bei diesen Ausführungsformen treten die Vorteile des erfindungsgemässen Verfahrens besonders deutlich zu Tage.

In noch einer weiteren bevorzugten Ausführungsform des Verfahrens wird ein Verbindungsbeschlag verwendet, dessen Beschlagskomponenten eine kreisrunde Grundform entsprechend der zugehörigen kreisrunden Bohrung aufweisen. Hierdurch werden besonders präzise und tragfähige Verbindungen möglich, da die radialen Begrenzungswandungen der ersten und zweiten Bohrungen grossflächig in Kontakt mit den Beschlagkomponenten stehen und dadurch optimal an der Tragfunktion teilnehmen können. Es ist jedoch auch vorgesehen, Verbindungsbeschläge mit eckigen oder kreisabschnittsförmigen Grundformen, z.B. mit rechteckigen oder quadratischen Grundkörpern, in dem erfindungsgemässen Verfahren zu verwenden.

Ein zweiter Aspekt der Erfindung betrifft einen Verbindungsbeschlag zur Verbindung eines Holzträgers mit einer Tragstruktur aus Holz unter Ausführung des Verfahrens gemäss dem ersten Aspekt der Erfindung. Der Verbindungsbeschlag umfasst eine erste und eine zweite Beschlagskomponente, wobei jede Beschlagskomponente jeweils einen axial von Befestigungsbohrungen für Befestigungsschrauben oder Befestigungsnägel durchsetzten Grundkörper aufweist. Dabei können die Befestigungsbohrungen exakt axial oder auch schräg durch den Grundkörper verlaufen. Zudem weist die erste Beschlagskomponente ein oder mehrere axial vom Grundkörper abstehende Formelemente auf und die zweite Beschlagskomponente eine Gegenkontur zur Bildung eines Formschlusses in axialer Richtung und in drei von vier radialen Richtungen mit dem Formelement oder den Formelementen der ersten Beschlagskomponente. Das oder die Formelemente und die Gegenkontur sind dabei derartig ausgestaltet, dass der Formschluss zwischen den beiden Beschlagskomponenten durch radiales Bewegen derselben relativ zueinander herstellbar ist. Das Formelement der ersten Beschlagskomponente ist als sich in radialer Richtung erstreckende Formnase mit einem hinterschnittenen Profilquerschnitt ausgebildet und die Gegenkontur der zweiten Profilkomponente ist derartig ausgebildet, dass der Formschluss zwischen den Beschlagskomponenten in axialer Richtung durch Eingreifen der Gegenkontur in den oder die Hinterschnitte der Profilnase bewirkt wird. Der Grundkörper der Beschlagkomponenten weist in axialer Richtung gesehen jeweils eine kreisrunde Form, eine die kreisrunde Form annähernde Vieleckform mit mehr als vier Ecken oder die Form eines Kreisabschnitts auf. Hierdurch wird es möglich, die Beschlagskomponenten in einfach herzustellenden kreisrunden Bohrungen exakt zu zentrieren und zudem eine gute Kraftübertragung zwischen der jeweiligen Beschlagskomponente und dem mit ihr zu befestigenden Bauteil sicherzustellen, weil die radialen Begrenzungswandungen der Bohrungen grossflächig an der Tragfunktion teilnehmen können.

In einer bevorzugten Ausführungsform des erfindungsgemässen Verbindungsbeschlags weisen die Grundkörper der beiden Beschlagskomponenten in axialer Richtung gesehen eine identische Querschnittsform von identischer Querschnittsgrösse auf. Hierdurch ergibt sich der Vorteil, dass für deren Installation lediglich ein einziger Bohrer benötigt wird.

In einer weiteren bevorzugten Ausführungsform ist der Profilquerschnitt der Formnase schwalbenschwanzförmig ausgebildet. Solche Verbindungen haben sich im Holzbau bewährt.

Auch ist es bei solchen Ausführungsformen bevorzugt, wenn der Profilquerschnitt von der Spitze der Formnase zur Wurzel der Formnase hin in seiner Breite zunimmt, wobei er bevorzugterweise in seiner Höhe gleichbleibend ist. Durch diese Bauweise wird ein einfaches Zusammenführen der beiden Beschlagskomponenten begünstigt und gleichzeitig eine im zusammengefügten Zustand radial spielfreie Verbindung möglich.

Weist die Spitze der Formnase ebenfalls einen Hinterschnitt auf, welcher zudem bevorzugterweise identisch ausgebildet ist wie der Hinterschnitt des Profilquerschnitts der Formnase, und ist die Gegenkontur der zweiten Beschlagskomponente dabei derartig ausgebildet, dass sie in diesen Hinterschnitt eingreift, so ergibt sich eine besonders stabile Verbindung. Ist die Spitze der Formnase zudem gerundet ausgebildet, bevorzugterweise kreisrund, und noch bevorzugter in Form eines Halbkreises, so ergibt sich eine gute Zentrierung bei einer gleichzeitig relativ unempfindlichen Nasenkontur.

Nimmt die Breite des Querschnitts der Formnase im Bereich der Nasenwurzel in Richtung von der Nasenspitze zur Nasenwurzel hin gesehen gegenüber dem Bereich zwischen Nasenspitze und Nasenwurzel überproportional zu, so ergibt sich der Vorteil, dass sich eine relativ grosse Positionstoleranz zwischen der ersten und der zweiten Beschlagskomponente für das Zusammenführen derselben ergibt, was insbesondere dann von Bedeutung ist, wenn mit diesen schwere Bauteile wie Tragbalken auf der Baustelle verbunden werden sollen.

In einer weiteren bevorzugten Ausführungsform des Verbindungsbeschlags sind die Beschlagskomponenten durch zerspanende Bearbeitung aus einem Halbzeugmaterial hergestellt, bevorzugterweise aus einem stranggepressten oder gezogenen Metallstangenmaterial, bevorzugterweise aus einer runden Aluminiumstange. Solche Verbindungsbeschläge können ohne aufwendige Formwerkzeuge und mittels herkömmlichen CNC-Fräsmaschinen in industriellen Stückzahlen hergestellt werden.

Ein dritter Aspekt der Erfindung betrifft eine Verbindung zwischen einem Holzträger und einer Tragstruktur aus Holz, welche herstellbar mit dem Verfahren gemäss dem ersten Aspekt ist, also alle körperlichen Merkmale umfasst, welche sich bei Ausführung des Verfahrens zwangsläufig ergeben, oder welche zudem auch tatsächlich mit dem Verfahren gemäss dem ersten Aspekt der Erfindung hergestellt worden ist.

Ein vierter Aspekt der Erfindung betrifft eine Anwendung des Verfahrens gemäss dem ersten Aspekt der Erfindung zum Verbinden eines Holzträgers mit einer Tragstruktur aus Holz, bevorzugterweise zum Verbinden zweier Holzträger miteinander.

Weitere bevorzugte Ausführungen der Erfindung ergeben sich aus den abhängigen Ansprüchen sowie aus der nun folgenden Beschreibung anhand der Figuren. Dabei zeigen:
die Figuren 1a und 1b eine anspruchsgemässe erste Beschlagskomponente eines erfindungsgemässen Verbindungsbeschlags in der Seitenansicht und in der Vorderansicht;
die Figuren 2a und 2b die zur ersten Beschlagskomponente der Figuren 1a und 1b zugehörige anspruchsgemässe zweite Beschlagskomponente des Verbindungsbeschlags;
Fig. 3 die ersten Beschlagskomponente aus den Figuren 1a und 1b befestigt an einem Nebenträger; und
Fig. 4 die zweite Beschlagskomponente aus den Figuren 2a und 2b befestigt an einem Hauptträger.

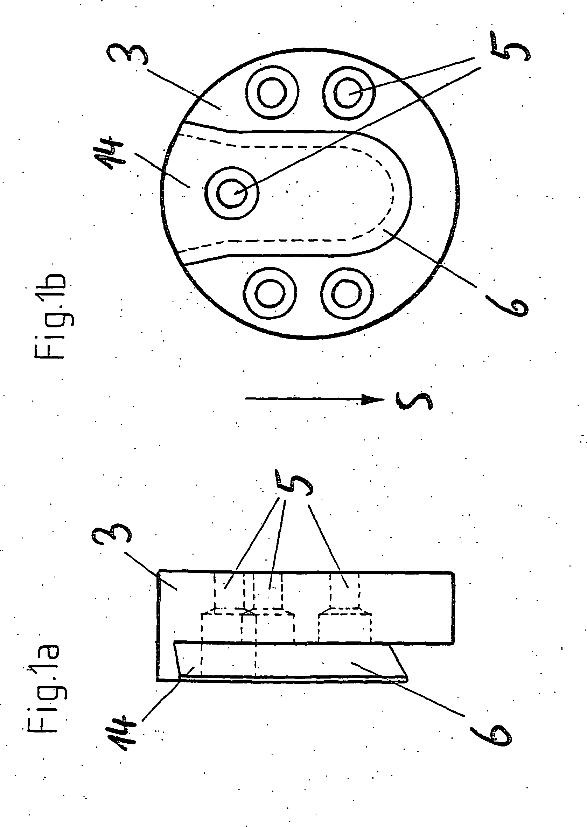

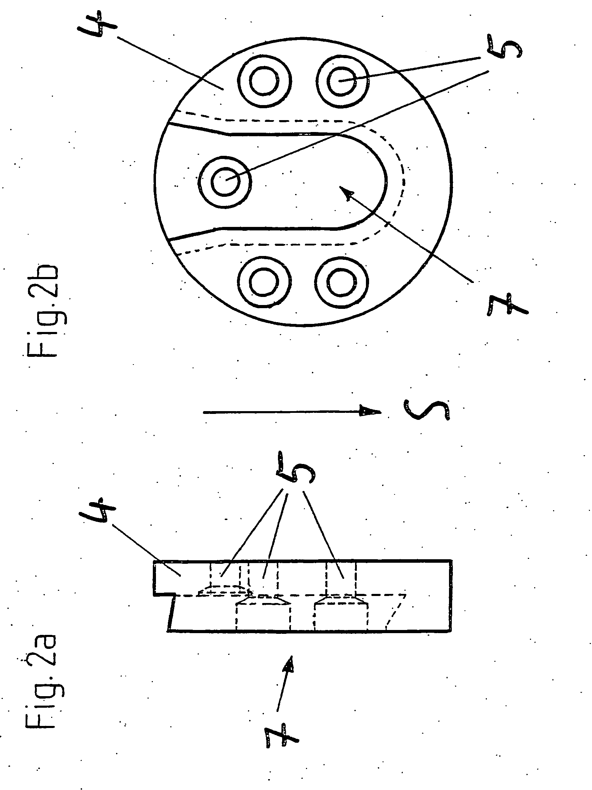

Die beiden Beschlagskomponenten 3, 4 eines erfindungsgemässen Verbindungsbeschlags zum Verbinden eines Holzträgers 1 mit einer Tragstruktur 2 aus Holz sind in den Figuren 1a, 1b und 2a, 2b jeweils einmal in der Seitenansicht (Figuren 1a und 2a) und einmal in der Vorderansicht (Figuren 1b und 2b) dargestellt. Die in der jeweiligen Ansicht unsichtbaren Körperkonturkanten sind gestrichelt dargestellt. Wie aus den Vorderansichten deutlich zu erkennen ist, weisen beide Beschlagkomponenten 3, 4 in axialer Richtung gesehen eine kreisrunde Form identischen Durchmessers auf und sind in axialer Richtung jeweils von fünf Befestigungsbohrungen 5 für Befestigungsschrauben 12 durchsetzt, wobei die Befestigungsbohrungen 5 auf den bei bestimmungsgemässer Installation die axialen Aussenseiten der Beschlagskomponenten 3, 4 bildenden Seiten über Senkungen zur Aufnahme der Schraubenköpfe verfügen. Die anspruchsgemässe erste Beschlagkomponente 3 weist ein axial von ihrem Grundkörper vorstehendes, als radial sich erstreckende Formnase 6 ausgebildetes anspruchsgemässes Formelement 6 auf. Die Formnase 6 weist eine halbkreisförmige Nasenspitze und eine sich zu dem der Nasenspitze entgegen gesetzten Ende hin deutlich verbreiternde Nasenwurzel 14 auf. Die Höhe der Formnase 6 ist indes über ihre gesamte Erstreckung gleich bleibend, wie aus der Seitenansicht Fig. 1a ersichtlich ist. Wie aus der gestrichelt dargestellten unsichtbaren Körperkonturkante in Fig. 1b weiter ersichtlich wird, ist die Formnase an ihren Seiten und an ihrer Spitze schräg nach innen hinterschnitten, so dass sie quer zu ihrer Längserstreckung bzw. bei bestimmungsgemässem Einbau quer zur vorgesehenen Schwerkraftrichtung S einen schwalbenschanzförmigen Querschnitt aufweist.

Wie aus den Figuren 2a und 2b zu entnehmen ist, weist die anspruchsgemässe zweite Beschlagskomponente 4 eine Ausnehmung 7 entsprechend der Kontur der Formnase 6 der anspruchsgemässen ersten Beschlagskomponente 3 auf, welche in ihren Grundkörper eindringt und die anspruchsgemässe Gegenkontur 7 bildet. Durch diese Ausgestaltung ist es möglich, die Formnase 6 der ersten Beschlagskomponente 3 radial in Richtung der für die bestimmungsgemässe Verwendung des Verbindungsbeschlags vorgesehenen Schwerkraftrichtung S in die Ausnehmung bzw. Gegenkontur 7 der zweiten Beschlagskomponente einzuführen und hierdurch einen Formschluss in axialer Richtung und radial in der vorgesehenen Schwerkraftrichtung und in den beiden quer dazu verlaufenden horizontalen Richtungen herzustellen. Dabei wird das Einführen der Formnase 6 in die Ausnehmung 7 durch die kreisrunde Nasenspitze und die erweiterte Nasenwurzel 14 deutlich erleichtert. Nach vollständigen Zusammenfügen bilden die beiden Beschlagskomponenten 3, 4 zusammen eine kreisrunde Körperlichkeit konstanten Durchmessers mit einer axialen Erstreckung, welche dem Zweifachen der axialen Erstreckung der zweiten Beschlagkomponente 4 entspricht.

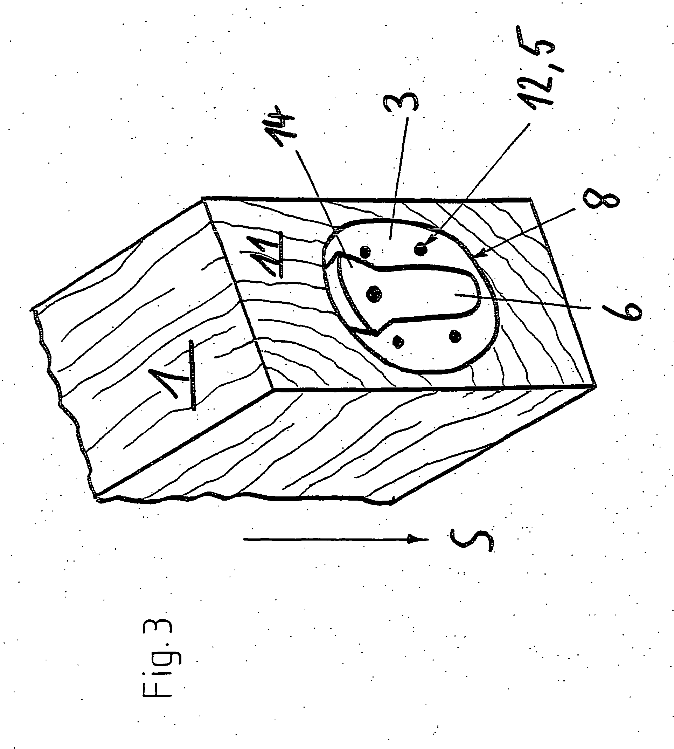

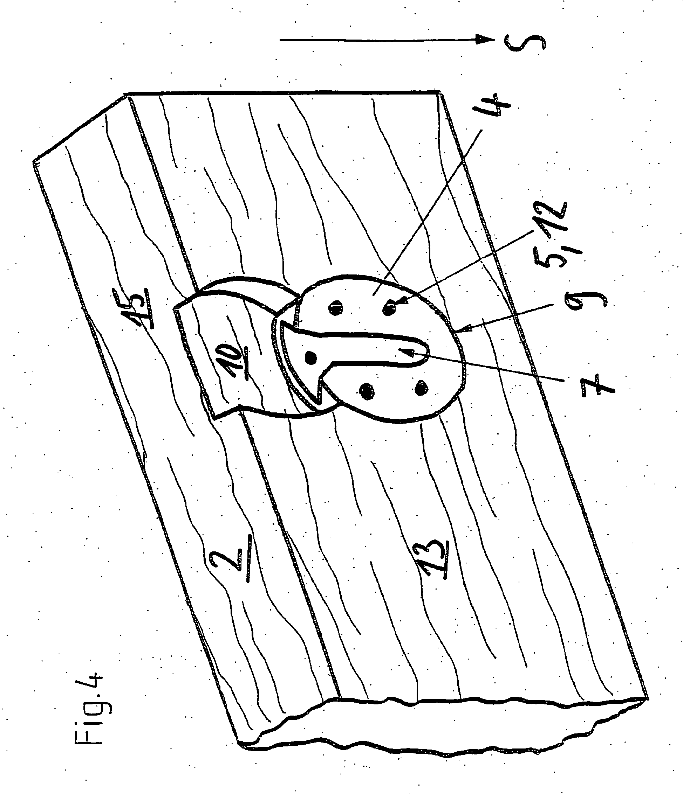

Die Figuren 3 und 4 zeigen die beiden Beschlagskomponenten 3, 4 im Verlaufe der Ausführung des erfindungsgemässen Verfahrens befestigt an einem Haupt-und einem Nebenträger 2, 1, welche miteinander zu verbinden sind. Wie zu erkennen ist, ist die erste Beschlagkomponente 3 in einer ihrem Aussendurchmesser entsprechenden anspruchsgemässen ersten Bohrung 8 in der Stirnfläche 11 des an den Hauptträger 2 anzuschliessenden Nebenträgers 1 angeordnet und dort mit Befestigungsschrauben 12 befestigt. Dabei ist der Grundkörper der ersten Beschlagskomponente 3 oberflächenbündig mit der Stirnfläche 11 des Nebenträgers 1, während die Formnase 6 axial mit ihrer gesamten Profilhöhe hervorsteht, wobei die Nasenspitze der Formnase 6 in Richtung der für den Einbau vorgesehenen Schwerkraftrichtung S zeigt. Die zweite Beschlagskomponente 4 ist in einer ihrem Aussendurchmesser entsprechenden anspruchsgemässen zweiten Bohrung 9 in einer vertikalen Fläche 13 des Hauptträgers 2 angeordnet und dort ebenfalls mit Befestigungsschrauben 12 befestigt. Auch hier ist der Grundkörper der Beschlagskomponente 4 oberflächenbündig eingesetzt. Die Nasenspitze der Gegenkontur 7 zeigt in Schwerkraftrichtung S. Wie zu erkennen ist, weist die vertikale Seitenfläche 13 des Hauptträgers 2 neben der Bohrung 9, welche die zweite Beschlagskomponente aufnimmt, eine weitere Bohrung 10 gleichen Durchmessers und gleicher Tiefe auf, welche in Schwerkraftrichtung S gesehen oberhalb der erstgenannten Bohrung 9 angeordnet ist und sich mit dieser mit einer Breite quer zur Schwerkraftrichtung überschneidet, welche grösser ist als die Breite der Formnase 6 bzw. der Gegenkontur 7 im Bereich der breitesten Stelle, welche die Nasenwurzel 14 ist. Zudem überschneidet sich die weitere Bohrung 10 nach oben hin mit der Ebene der oberen Fläche 15 des Hauptträgers 2, so dass sie radial nach oben geöffnet ist. Im vorliegenden Fall weist diese Öffnung eine Breite auf, welche identisch der Breite der Überschneidung mit der anspruchsgemässen zweiten Bohrung 9 ist. Hierdurch bildet die weitere Bohrung 10 in Schwerkraftrichtung S einen Durchgang, durch welchen die Formnase 6 der ersten Beschlagskomponente 3 in Schwerkraftrichtung S in die Ausnehmung 7 der zweiten Beschlagskomponente 4 eingeführt und somit der Formschluss zwischen den Beschlagskomponenten 3, 4 und damit zwischen Haupt- 2 und Nebenträger 1 hergestellt werden kann. Der Verbindungsbeschlag ist nach dem Zusammenfügen nur noch durch die obere Öffnung der weiteren Bohrung 10 sichtbar, welche üblicherweise durch eine auf den Trägern 1, 2 angeordnete Geschossdecke verdeckt wird.

## Patentansprüche

1. Verfahren zum stirnseitigen Verbinden eines Holzträgers (1) mit einer Tragstruktur (2) aus Holz mittels eines Verbindungsbeschlags (3, 4) mit einer ersten (3) und einer zweiten Beschlagskomponente (4), wobei jede Beschlagskomponente (3, 4) axial von Befestigungsbohrungen (5) für Befestigungsschrauben (12) oder Befestigungsnägel durchsetzt ist und wobei die erste Beschlagskomponente (3) ein axial abstehendes Formelement (6) aufweist und die zweite Beschlagskomponente (4) eine Gegenkontur (7) zur Bildung eines Formschlusses in axialer Richtung und in drei von vier radialen Richtungen mit dem Formelement (6) der ersten Beschlagskomponente (3) aufweist und wobei Formelement (6) und Gegenkontur (7) derartig ausgestaltet sind, dass der Formschluss durch ein radiales Bewegen der beiden Beschlagskomponenten (3, 4) relativ zueinander herstellbar ist, umfassend die Schritte:
a) Einbringen einer ersten kreisrunden Bohrung (8) in eine Stirnfläche (11) des Holzträgers (1);
b) Einsetzen der ersten Beschlagskomponente (3) in die erste Bohrung (8) derart, dass diese durch die Umfangsbegrenzungen der ersten Bohrung (8) radial zentriert wird und das Formelement (6) der ersten Beschlagskomponente (3) axial über die Stirnfläche (11) des Holzträgers (1) übersteht;
c) Befestigen der so eingesetzten ersten Beschlagskomponente (3) in der ersten Bohrung (8) mit die Befestigungsbohrungen (5) durchsetzenden Befestigungsschrauben (12) und/oder Befestigungsnägeln;
d) Einbringen einer zweiten kreisrunden Bohrung (9) und mindestens einer weiteren kreisrunden Bohrung (10) in eine vertikal orientierte oder zur vertikalen Orientierung vorgesehene Fläche (13) der Tragstruktur (2) derart,
dass sich die zweite und die weiteren Bohrungen (9, 10) in Schwerkraftrichtung (S) oder in einer Richtung, welche bei der vorgesehenen Einbaulage der Holzstruktur die Schwerkraftrichtung (S) ist, radial überschneiden, wobei die weiteren Bohrungen (10) in Schwerkraftrichtung (S) oder in der vorgesehenen Schwerkraftrichtung (S) gesehen oberhalb der zweiten Bohrung (9) angeordnet werden, und
dass die Bohrungen (9, 10) jeweils mindestens eine Bohrungstiefe aufweisen, welche dem axialen Überstand des Formelements (6) der ersten Beschlagskomponente (3) über die Stirnfläche (11) des Holzträgers (1) entspricht,
e) Einsetzen der zweiten Beschlagskomponente (4) in die zweite Bohrung (9) derart, dass diese durch die Umfangsbegrenzungen der zweiten Bohrung (9) radial zentriert wird und axial im wesentlichen bündig mit der Oberfläche (13) der Tragstruktur (2) ist oder hinter diese zurückversetzt ist;
f) Ausrichten der zweiten Beschlagskomponente (4) in der zweiten Bohrung (9) derart, dass ein bestimmungsgemässes Zusammenfügen der beiden Beschlagskomponenten (3, 4) durch Bewegen der ersten Beschlagskomponente (3) relativ zur zweiten Beschlagskomponente (4) in Schwerkraftrichtung (S) oder in der vorgesehenen Schwerkraftrichtung (S) möglich ist;
g) Befestigen der so eingesetzten und ausgerichteten zweiten Beschlagskomponente (4) in der zweiten Bohrung (9) mit die Befestigungsbohrungen (5) durchsetzenden Befestigungsschrauben (12) und/oder Befestigungsnägeln;
h) Bewegen des Formelements (6) der an dem Holzträger (1) befestigten ersten Beschlagskomponente (3) in Schwerkraftrichtung (S) oder in der vorgesehenen Schwerkraftrichtung (S) innerhalb der mindestens einen weiteren Bohrung (10) zur zweiten Beschlagskomponente (4) hin; und
i) Herstellen der Verbindung zwischen Holzträger (1) und Tragstruktur (2) durch bestimmungsgemässes Zusammenfügen der beiden Beschlagskomponenten (3, 4) des Verbindungsbeschlags (3, 4) in Schwerkraftrichtung (S) oder in der vorgesehenen Schwerkraftrichtung (S) unter Herstellung des Formschlusses zwischen den beiden Beschlagskomponenten (3, 4).

2. Verfahren nach Anspruch 1, **dadurch gekennzeichnet, dass** die zwischen der zweiten Bohrung (9) und den weiteren Bohrungen (10) gebildeten Überschneidungsbereiche quer zur Schwerkraftrichtung (S) oder zur vorgesehenen Schwerkraftrichtung (S) mindestens eine Breite aufweisen, welche der maximalen Erstreckung des Formelements (6) der ersten Beschlagskomponente (3) quer zur vorgesehene Schwerkraftrichtung (S) entspricht.

3. Verfahren nach Anspruch 1, **dadurch gekennzeichnet, dass** die zwischen der zweiten Bohrung (9) und den weiteren Bohrungen (10) gebildeten Überschneidungsbereiche quer zur Schwerkraftrichtung (S) oder zur vorgesehenen Schwerkraftrichtung (S) eine Breite aufweisen, welche kleiner ist als die maximale Erstreckung des Formelements (6) der ersten Beschlagskomponente (3) quer zur vorgesehenen Schwerkraftrichtung (S) und dass diese Überschneidungsbereiche vor dem Bewegen des Formelements (6) innerhalb der Bohrungen (10) mittels eines Handwerkzeugs mit einer Klinge, insbesondere mittels eines Stechbeitels, derartig nachbearbeitet werden, dass sie anschliessend eine Breite aufweisen, welche mindestens der maximalen Erstreckung des Formelements (6) der ersten Beschlagskomponente (3) quer zur vorgesehene Schwerkraftrichtung (S) entspricht.

4. Verfahren nach einem der vorangehenden Ansprüche, **dadurch gekennzeichnet, dass** die in Schwerkraftrichtung (S) oder in der vorgesehenen Schwerkraftrichtung (S) zuoberst angeordnete weitere Bohrung (10) derartig in die Fläche (13) der Tragstruktur (2) eingebracht wird, dass sie radial nach oben hin geöffnet ist, wobei die Öffnung quer zur Schwerkraftrichtung (S) oder zur vorgesehenen Schwerkraftrichtung (S) eine Breite aufweist, welche mindestens der maximalen Erstreckung des Formelements (6) der ersten Beschlagskomponente (3) quer zur vorgesehene Schwerkraftrichtung (S) entspricht.

5. Verfahren nach einem der vorangehenden Ansprüche, **dadurch gekennzeichnet, dass** die in Schwerkraftrichtung (S) oder in der vorgesehenen Schwerkraftrichtung (S) zuoberst angeordnete weitere Bohrung (10) derartig in die Fläche (13) der Tragstruktur (2) eingebracht wird, dass sie radial nach oben hin geöffnet ist, wobei die Öffnung quer zur Schwerkraftrichtung (S) oder zur vorgesehenen Schwerkraftrichtung (S) eine Breite aufweist, welche kleiner ist als die maximale Erstreckung des Formelements (6) der ersten Beschlagskomponente (3) quer zur vorgesehene Schwerkraftrichtung (S) und dass diese Öffnung vor dem Einführen des Formelements (6) in die oberste weitere Bohrung (10) mittels eines Handwerkzeugs mit einer Klinge, insbesondere mittels eines Stechbeitels derartig nachbearbeitet wird, dass sie anschliessend eine Breite aufweist, welche mindestens der maximalen Erstreckung des Formelements (6) der ersten Beschlagskomponente (3) quer zur vorgesehene Schwerkraftrichtung (S) entspricht.

6. Verfahren nach einem der vorangehenden Ansprüche, **dadurch gekennzeichnet, dass** eine erste Beschlagskomponente (3) mit einem nicht rotationssymmetrischen Formelement (6) oder mit einer Anordnung aus mehreren Formelementen verwendet wird, wobei vorgängig zum Befestigen der ersten Beschlagskomponente (3) in der ersten Bohrung (8) ein Ausrichten derselben in der ersten Bohrung (8) erfolgt derart, dass ein bestimmungsgemässes Zusammenfügen der beiden Beschlagskomponenten (3, 4) des Verbindungsbeschlags (3, 4) durch Bewegen der zweiten Beschlagskomponente (4) relativ zur ersten Beschlagskomponente (3) in einer Richtung parallel zur Stirnfläche (11) des Holzträgers (1) und entgegen der Richtung, welche bei der vorgesehenen Einbaulage des Holzträgers (1) die Schwerkraftrichtung (S) ist, möglich ist.

7. Verfahren nach einem der vorangehenden Ansprüche, **dadurch gekennzeichnet, dass** die erste und die zweite Bohrung (8, 9) und insbesondere auch die weiteren Bohrungen (10) mit einem identischen Durchmesser ausgeführt werden.

8. Verfahren nach einem der vorangehenden Ansprüche, **dadurch gekennzeichnet, dass** die erste und die zweite Bohrung (8, 9) und insbesondere auch die weiteren Bohrungen (10) mit einer identischen Bohrungstiefe ausgeführt werden.

9. Verfahren nach einem der vorangehenden Ansprüche, **dadurch gekennzeichnet, dass** als Tragstruktur (2) ein weiterer Holzträger (2) verwendet wird und dass der Holzträger (1) derartig mit dem weiteren Holzträger (2) verbunden wird, dass die Oberseiten und/oder die Unterseiten der beiden Holzträger (1, 2) im wesentlichen oberflächenbündig sind.

10. Verfahren nach Anspruch 9, **dadurch gekennzeichnet, dass** die Bohrungen (9, 10) im weiteren Holzträger (2) quer zur Faserrichtung eingebracht werden.

11. Verfahren nach einem der vorangehenden Ansprüche, dass ein Verbindungsbeschlag (3, 4) verwendet wird, dessen Beschlagskomponenten (3, 4) eine kreisrunde Grundform entsprechend der jeweils zugehörigen Bohrung (8, 9) aufweisen.

12. Verbindungsbeschlag (3, 4) zum Verbinden eines Holzträgers (1) mit einer Tragstruktur (2) aus Holz gemäss dem Verfahren nach einem der vorangehenden Ansprüche, umfassend eine erste und eine zweite Beschlagskomponente (3, 4), wobei jede Beschlagskomponente (3, 4) jeweils axial von Befestigungsbohrungen (5) für Befestigungsschrauben (12) oder Befestigungsnägel durchsetzt ist und wobei die erste Beschlagskomponente (3) mindestens ein axial abstehendes Formelement (6) aufweist und die zweite Beschlagskomponente (4) eine Gegenkontur (7) zur Bildung eines Formschlusses in axialer Richtung und in drei von vier radialen Richtungen mit dem mindestens einen Formelement (6) aufweist und Formelement (6) und Gegenkontur (7) derartig ausgestaltet sind, dass der Formschluss durch radiales Bewegen der beiden Beschlagskomponenten (3, 4) relativ zueinander herstellbar ist, wobei die Beschlagskomponenten (3, 4) in axialer Richtung gesehen eine kreisrunde Form, eine die kreisrunde Form annähernde Vieleckform oder die Form eines Kreisabschnitts aufweisen, **dadurch gekennzeichnet, dass** das Formelement (6) als sich in radialer Richtung erstreckende Formnase (6) mit einem hinterschnittenen Profilquerschnitt ausgebildet ist und der axiale Formschluss durch Eingreifen der Gegenkontur (7) in den oder die Hinterschnitte bewirkt wird.

13. Verbindungsbeschlag (3, 4) nach Anspruch 12, **dadurch gekennzeichnet, dass** die beiden Beschlagskomponenten (3, 4) in axialer Richtung gesehen einen identischen Querschnitt aufweisen.

14. Verbindungsbeschlag (3, 4) nach einem der Ansprüche 12 bis 13, **dadurch gekennzeichnet, dass** der Profilquerschnitt der Formnase (6) schwalbenschwanzförmig ausgebildet ist.

15. Verbindungsbeschlag (3, 4) nach einem der Ansprüche 12 bis 14, **dadurch gekennzeichnet, dass** der Profilquerschnitt von der Spitze der Formnase (6) zur Wurzel (14) der Formnase hin in seiner Breite zunimmt, und insbesondere, dass er dabei in seiner Höhe gleichbleibend ist.

16. Verbindungsbeschlag (3, 4) nach einem der Ansprüche 12 bis 15, **dadurch gekennzeichnet, dass** die Spitze der Formnase (6) ebenfalls hinterschnitten ist, insbesondere einen identischen Hinterschnitt aufweist wie der Profilquerschnitt der Formnase (6), und dass die Gegenkontur (7) der zweiten Beschlagskomponente (4) ausgebildet ist zum Eingreifen in diesen Hinterschnitt.

17. Verbindungsbeschlag (3, 4) nach einem der Ansprüche 12 bis 16, **dadurch gekennzeichnet, dass** die Spitze der Formnase (6) gerundet ausgebildet ist, insbesondere die Form eines Kreisabschnittes, insbesondere eines Halbkreises aufweist.

18. Verbindungsbeschlag (3, 4) nach einem der Ansprüche 12 bis 17, **dadurch gekennzeichnet, dass** die Breite des Querschnitts der Formnase (6) im Bereich der Nasenwurzel (14) in Richtung von der Nasenspitze zur Nasenwurzel (14) hin gesehen gegenüber dem Bereich zwischen Nasenspitze und Nasenwurzel (14) überproportional zunimmt.

19. Verbindungsbeschlag (3, 4) nach einem der Ansprüche 12 bis 18, **dadurch gekennzeichnet, dass** die Beschlagskomponenten (3, 4) durch zerspanende Bearbeitung aus einem Halbzeugmaterial hergestellt sind, insbesondere aus einem stranggepressten oder gezogenen Metallstangenmaterial, insbesondere aus einer runden Aluminiumstange.

20. Verbindung zwischen einem Holzträger (1) und einer Tragstruktur (2) aus Holz, hergestellt mit dem Verfahren nach einem der Ansprüche 1 bis 11.

21. Anwendung des Verfahrens nach einem der Ansprüchen 1 bis 11 zum Verbinden eines Holzträgers (1) mit einer Tragstruktur (2) aus Holz, insbesondere zum Verbinden zweier Holzträger (1, 2) miteinander.

## Claims

1. Method of connecting a wooden girder (1) at its front face with a supporting structure (2) made of wood by means of a connecting armature (3, 4) having a first (3) and a second armature component (4), wherein each of the armature components (3, 4) is axially penetrated by connecting holes (5) for connecting screws (12) or connecting nails and wherein the first armature component (3) comprises an axially protruding shaped element (6) and the second armature component (4) comprises a countercontour (7) for forming a positive locking in axial direction and in three of four radial directions with the shaped element (6) of the first armature component (3) and wherein the shaped element (6) and the countercontour (7) are designed in such a manner that the positive locking can be established by radially moving the two armature components (3, 4) relative to each other, comprising the steps:
a) generating a first circular borehole (8) in a front face (11) of the wooden girder (1);
b) inserting the first armature component (3) into the first borehole (8) in such a manner that it is radially centered by the circumferential boundaries of the first borehole (8) and that the shaped element (6) of the first armature component (3) axially protrudes beyond the front face (11) of the wooden girder (1);
c) fastening the first armature component (3) inserted in such a manner by means of connecting screws (12) and/or connecting nails penetrating the connecting holes (5) in the first borehole (8);
d) generating a second circular borehole (9) and at least one further circular borehole (10) in a vertically oriented surface (13) or a surface (13) that is intended for being vertically oriented of the supporting structure (2) in such a manner
that the second and the further boreholes (9, 10) in gravity direction (S) or in a direction, which in the intended installation position of the wooden structure is the gravity direction (S), radially overlap each other, wherein the further boreholes (10) seen in gravity direction (S) or in the intended gravity direction (S) are arranged above the second borehole (9), and
that the boreholes (9, 10) in each case at least have a drill depth which corresponds to the axial projecting length beyond the front face (11) of the wooden girder (1) of the shaped element (6) of the first armature component (3),
e) inserting the second armature component (4) into the second borehole (9) in such a manner that it is radially centered by the circumferential boundaries of the second borehole (9) and axially is substantially flush with the surface (13) of the supporting structure (2) or is set back beyond this surface;
f) aligning the second armature component (4) inside the second borehole (9) in such a manner that an intended assembling of the two armature components (3, 4) is possible through a movement of the first armature component (3) relative to the second armature component (4) in gravity direction (S) or in the intended gravity direction (S);
g) fastening the second armature component (4) inserted in such a manner by means of connecting screws (12) and/or connecting nails penetrating the connecting holes (5) in the second borehole (9);
h) moving the shaped element (6) of the first armature component (3) which is fastened at the wooden girder (1) in gravity direction (S) or in the intended gravity direction (S) within the at least one further borehole (10) towards the second armature component (4); and
i) establishing the connection between the wooden girder (1) and the supporting structure (2) through an intended assembling of the two armature components (3, 4) of the connecting armature (3, 4) in gravity direction (S) or in the intended gravity direction (S), thereby establishing the positive locking between the two armature components (3, 4).

2. Method according to claim 1, **characterized in that** the overlapping areas formed between the second borehole (9) and the further boreholes (10) transverse to the gravity direction (S) or to the intended gravity direction (S) at least have a width which corresponds to the maximal extend of the shaped element (6) of the first armature component (3) transverse to the intended gravity direction (S).

3. Method according to claim 1, **characterized in that** the overlapping areas formed between the second borehole (9) and the further boreholes (10) transverse to the gravity direction (S) or to the intended gravity direction (S) have a width which is smaller than the maximal extend of the shaped element (6) of the first armature component (3) transverse to the intended gravity direction (S) and that these overlapping areas prior to the moving of the shaped element (6) within the boreholes (10) are reworked by means of a hand tool having a blade, in particular by means of a chisel, in such a manner that afterwards they have a width which at least corresponds to the maximal extend of the shaped element (6) of the first armature component (3) transverse to the intended gravity direction (S).

4. Method according to one of the preceding claims, **characterized in that** the further borehole (10), which in gravity direction (S) or in intended gravity direction (S) is arranged right on top, is generated in the surface (13) of the supporting structure (2) in such a manner that radially towards the top it is open, wherein the opening transverse to the gravity direction (S) or to the intended gravity direction (S) has a width which at least corresponds to the maximal extend of the shaped element (6) of the first armature component (3) transverse to the intended gravity direction (S).

5. Method according to one of the preceding claims, **characterized in that** the further borehole (10), which in gravity direction (S) or in intended gravity direction (S) is arranged right on top, is generated in the surface (13) of the supporting structure (2) in such a manner that radially towards the top it is open, wherein the opening transverse to the gravity direction (S) or to the intended gravity direction (S) has a width which is smaller than the maximal extend of the shaped element (6) of the first armature component (3) transverse to the intended gravity direction (S) and that this opening prior to the introducing of the shaped element (6) into the topmost borehole (10) is reworked by means of a hand tool having a blade, in particular by means of a chisel, in such a manner that afterwards it has a width which at least corresponds to the maximal extend of the shaped element (6) of the first armature component (3) transverse to the intended gravity direction (S).

6. Method according to one of the preceding claims, **characterized in that** a first armature component (3) having a non rotationally symmetrical shaped element (6) or having an arrangement of several shaped elements is used, wherein prior to the fastening of the first armature component (3) in the first borehole (8) an aligning of same in the first borehole (8) takes place in such a manner that an intended assembling of the two armature components (3, 4) of the connecting armature (3, 4) is possible by moving the second armature component (4) relative to the first armature component (3) in a direction parallel to the front face (11) of the wooden girder (1) and contrary to the direction, which in the intended installation position of the wooden girder (1), is the gravity direction (S).

7. Method according to one of the preceding claims, **characterized in that** the first and the second borehole (8, 9) and in particular also the further boreholes (10) are generated with an identical diameter.

8. Method according to one of the preceding claims, **characterized in that** the first and the second borehole (8, 9) and in particular also the further boreholes (10) are generated with an identical drill depth.

9. Method according to one of the preceding claims, **characterized in that** as supporting structure (2) a further wooden girder (2) is used and that the wooden girder (1) is connected to the further wooden girder (2) in such a manner that the top sides and/or the bottom sides of the two wooden girders (1, 2) are substantially flush.

10. Method according to claim 9, **characterized in that** the boreholes (9, 10) in the further wooden girder (2) are generated transverse to the fiber direction.

11. Method according to one of the preceding claims, **characterized in that** a connecting armature (3, 4) is used the armature components (3, 4) of which have a circular basic shape corresponding to the respective dedicated borehole (8, 9).

12. Connecting armature (3, 4) for connecting a wooden girder (1) with a supporting structure (2) made of wood according to the method of one of the preceding claims, comprising a first and a second armature component (3, 4), wherein each of the armature components (3, 4) in each case is axially penetrated by connecting holes (5) for connecting screws (12) or connecting nails and wherein the first armature component (3) comprises at least one axially protruding shaped element (6) and the second armature component (4) comprises a countercontour (7) for forming a positive locking in axial direction and in three of four radial directions with the at least one shaped element (6), and the shaped element (6) and the countercontour (7) are designed in such a manner that the positive locking can be established by radially moving the two armature components (3, 4) relative to each other, wherein the armature components (3, 4) seen in axial direction have a circular shape, a polygonal shape approximating the circular shape or the shape of a segment of a circle, **characterized in that** the shaped element (6) is designed as a shaped nose (6) extending in radial direction having an undercut profile cross section and that the axial positive locking is effected by an engaging of the countercontour (7) in the undercut or the undercuts.

13. Connecting armature (3, 4) according to claim 12, **characterized in that** the two armature components (3, 4) seen in axial direction have an identical cross section.

14. Connecting armature (3, 4) according to one of the claims 12 to 13, **characterized in that** the profile cross section of the shaped nose (6) has a dovetail like shape.

15. Connecting armature (3, 4) according to one of the claims 12 to 14, **characterized in that** the profile cross section from the tip of the shaped nose (6) to the root of the shaped nose increases in its width, and in particular, that at the same time it is constant in its height.

16. Connecting armature (3, 4) according to one of the claims 12 to 15, **characterized in that** the tip of the shaped nose (6) also is undercut, in particular comprises an undercut which is identical to the one of the profile cross section of the shaped nose (6), and that the countercontour (7) of the second armature component (4) is shaped for engaging into this undercut.

17. Connecting armature (3, 4) according to one of the claims 12 to 16, **characterized in that** the tip of the shaped nose (6) is rounded, in particular has the shape of a segment of a circle, in particular of a semicircle.

18. Connecting armature (3, 4) according to one of the claims 12 to 17, **characterized in that** the width of the cross section of the shaped nose (6) in the region of the root of the nose (14) seen in direction from the nose tip to the root of the nose (14) disproportionately increases compared to the region between the nose tip and the root of the nose (14)

19. Connecting armature (3, 4) according to one of the claims 12 to 18, **characterized in that** the armature components (3, 4) are manufactured from a semifinished material by shape cutting, in particular from an extruded or drawn metal bar material, in particular from a round aluminum bar.

20. Connection between a wooden girder (1) and a supporting structure (2) made of wood, manufactured with the method according to one of the claims 1 to 11.

21. Use of the method according to one of the claims 1 to 11 for connecting a wooden girder (1) with a supporting structure (2) made of wood, in particular for connecting two wooden girders (1, 2) with each other.

## Revendications

1. Méthode pour connecter une poutre en bois (1) par sa face antérieure à une structure portante (2) en bois à l'aide d'une armature de connexion (3, 4) avec un premier (3) et un deuxième composant d'armature (4), chacun des composants d'armature (3, 4) étant axialement pénétrés par des trous de connexion (5) pour des vis de connexion (12) ou par des clous de connexion et le premier composant d'armature (3) comportant un élément (6) qui fait saillie axialement et le deuxième composant d'armature (4) comportant un contre-contour (7) pour former un engagement positif dans une direction axiale et en trois de quatre directions radiales avec l'élément (6) du premier composant d'armature (3) et l'élément (6) et le contre-contour (7) sont formés de sorte que l'engagement positif puisse être établi par un mouvement radial des deux composant d'armature (3, 4) l'un relative à l'autre, comportant les pas de:
a) générer un premier alésage circulaire (8) dans une face antérieure (11) de la poutre en bois (1);
b) insérer le premier composant d'armature (3) dans le premier alésage (8) de sorte que il soit radialement centré par les délimitations de circonférence du premier alésage (8) et que l'élément (6) du premier composant d'armature (3) fasse saille au-delà de la face antérieure (11) de la poutre en bois (1);
c) fixer le premier composant d'armature (3) inséré d'une telle manière à l'aide de vis de connexion (12) et/ou de clous de connexion qui pénètrent les trous de connexion (5) dans le premier alésage (8);
d) générer un deuxième alésage circulaire (9) et au moins un alésage circulaire supplémentaire (10) dans une surface (13) orientée verticalement ou une surface (13) prévue pour être verticalement orientée de la structure portante (2) d'une telle manière que le deuxième et le supplémentaire alésage (9, 10) se superposent radialement dans la direction de gravité (S) ou dans une direction qui est la direction de gravité dans la position prévue pour l'installation de la structure en bois, les supplémentaires alésages (10), vu en direction de gravité (S) ou en direction prévue de gravité (S), étant arrangés au dessus du deuxième alésage (9), et
que les alésages (9, 10) dans tous le cas ont au moins une profondeur de perçage qui correspond à la longueur de projection axiale au-delà de la face antérieure (11) de la poutre en bois (1) de l'élément (6) du premier composant d'armature (3),
e) insérer le deuxième composant d'armature (4) dans le deuxième alésage (9) de telle manière qu'il soit radialement centré par les délimitations de circonférence du deuxième alésage (9) et qu'il soit axialement essentiellement affleurant la surface (13) de la structure portante (2) ou qu'il soit en retrait au-delà de cette surface;
f) aligner le deuxième composant d'armature (4) dans le deuxième alésage (9) d'une telle manière qu'un assemblage prévu des deux composants d'armature (3, 4) soit possible par un mouvement du premier composant d'armature (3) relative au deuxième composant d'armature (4) dans la direction de gravité (S) ou dans la direction prévue de gravité (S);
g) fixer le deuxième composant d'armature (4) inséré d'une telle manière à l'aide de vis de connexion (12) et/ou de clous de connexion qui pénètrent les trous de connexion (5) dans le deuxième alésage (9);
h) mouvoir l'élément (6) du premier composant d'armature (3) qui est fixé à la poutre en bois (1) dans la direction de gravité (S) ou dans la direction prévue de gravité (S) dans l'au moins un alésage supplémentaire (10) vers le deuxième composant d'armature (4); et
i) établir la connexion entre la poutre en bois (1) et la structure portante (2) par un assemblage prévu des deux composants d'armature (3, 4) de l'armature de connexion (3, 4) dans la direction de gravité (S) ou dans la direction prévue de gravité (S), par cela établissant l'engagement positif entre les deux composant d'armature (3, 4).

2. Méthode selon la revendication 1, **caractérisée en ce que** les surfaces superposées formées entre le deuxième alésage (9) et les alésages (10) supplémentaires transversales par rapport à la direction de gravité (S) ou la direction prévue de gravité (S), au moins ont une largeur qui correspond à l'élongation maximale de l'élément (6) du premier composant d'armature (3) transversale par rapport à la direction prévue de gravité (S).

3. Méthode selon la revendication 1, **caractérisée en ce que** les surfaces superposées formées entre le deuxième alésage (9) et les alésages (10) supplémentaires, transversales par rapport à la direction de gravité (S) ou la direction prévue de gravité (S), ont une largeur plus faible que l'élongation maximale de l'élément (6) du premier composant d'armature (3) transversale par rapport à la direction prévue de gravité (S) et **en ce que** ces surfaces superposées sont retravaillées, avant le mouvement de l'élément (6) dans les alésages (10), à l'aide d'un outil manuel avec une lame, particulièrement à l'aide d'un ciseau de menuisier, de manière à avoir après une largeur qui correspond au moins à l'élongation maximale de l'élément (6) du premier composant d'armature (3) transversale par rapport à la direction prévue de gravité (S).

4. Méthode selon l'une des revendications précédentes, **caractérisée en ce que** l'alésage supplémentaire (10), qui est arrangé sur le dessus dans la direction de gravité (S) ou la direction prévue de gravité, est générée dans la surface (13) de la structure portante (2) d'une telle manière qu'elle soit radialement ouverte vers le dessus, l'ouverture transversale par rapport à la direction de gravité (S) ou la direction prévue de gravité (S) ayant une largeur qui au moins correspond à l'élongation maximale de l'élément (6) du premier composant d'armature (3) transversale par rapport à la direction prévue de gravité (S).

5. Méthode selon l'une quelconque des revendications précédentes, **caractérisée en ce que** l'alésage supplémentaire (10) arrangé sur le dessus dans la direction de gravité (S) ou la direction prévue de gravité (S), est générée dans la surface (13) de la structure portante (2) d'une telle manière qu'elle soit radialement ouverte vers le dessus, l'ouverture transversale par rapport à la direction de la gravité (S) ou la direction prévue de la gravité (S) ayant une largeur qui est plus faible par rapport à l'élongation maximale de l'élément (6) du premier composant d'armature (3) transversale par rapport à la direction prévue de gravité (S) et que cette ouverture est retravaillée, avant l'insertion de l'élément (6) dans les alésages (10), à l'aide d'un outil manuel avec une lame, particulièrement à l'aide d'un ciseau de menuisier, de manière à avoir après une largeur qui correspond au moins à l'élongation maximale de l'élément (6) du premier composant d'armature (3) transversale par rapport à la direction prévue de gravité (S).

6. Méthode selon l'une des revendications précédentes, **caractérisée en ce qu'**un premier composant d'armature (3) avec un élément (6) de forme non-rotative-symétrique ou avec un arrangement de multiples éléments est utilisé, un premier alignement du premier composant d'armature (3) dans le premier alésage (8) est effectué avant la fixation du même dans le premier alésage (8) de sorte qu'un assemblage prévu des deux composants d'armature (3, 4) de l'armature de connexion (3, 4) soit possible par mouvoir le deuxième composant d'armature (4) relative au premier composant d'armature (3) dans une direction parallèle à la face antérieure (11) de la poutre en bois (1) et contrairement à la direction étant la direction de gravité (S) dans la position d'installation prévue de la poutre en bois (1).

7. Méthode selon l'une des revendications précédentes, **caractérisée en ce que** le premier et le deuxième alésage (8, 9) et particulièrement aussi les alésages supplémentaires (10) sont générés avec un diamètre identique.

8. Méthode selon les revendications précédentes, **caractérisée en ce que** le premier et le deuxième alésage (8, 9) et particulièrement aussi les alésages supplémentaires (10) sont générés avec une profondeur de perçage identique.

9. Méthode selon l'une des revendications précédentes, **caractérisée en ce qu'**une deuxième poutre en bois (2) est utilisée comme structure portante (2) et **en ce que** la poutre en bois (1) est connectée à la poutre en bois supplémentaire (2) de sorte que les surfaces de dessus et/ou les surfaces de dessous des deux poutres en bois (1, 2) soient substantiellement affleurant.

10. Méthode selon la revendication 9, **caractérisée en ce que** les alésages (9, 10) dans la poutre supplémentaire (2) sont générés transversalement à la direction de la fibre.

11. Méthode selon l'une des revendications précédentes, **caractérisée en ce qu'**une armature de connexion (3, 4) est utilisée, les composants d'armature (3, 4) de la quelle ont un forme de base circulaire, correspondant au respectif alésage (8, 9) dédié.

12. Armature de connexion (3, 4) pour connecter une poutre en bois (1) avec une structure portante (2) en bois selon la méthode d'une des revendications précédentes, comportant un premier et un deuxième composant d'armature (3, 4), chacun des composants d'armature (3, 4) étant dans chaque cas axialement pénétré par des trous de connexion (5) pour des vis de connexion (12) ou pour des clous de connexion, le premier composant d'armature (3) comportant au moins un élément (6) qui fait saillie axialement et le deuxième composant d'armature (4) comportant un contre-contour (7) pour former un engagement positif dans une direction axiale et en trois de quatre directions radiales avec l'au moins un élément (6), et l'élément (6) et le contre-contour (7) sont formés de sorte que l'engagement positif puisse être établi par un mouvement radial des deux composant d'armature (3, 4) l'un relative à l'autre, les composants d'armature (3, 4) ayant une forme circulaire, une forme polygonale approximant la forme circulaire ou la forme d'un segment d'un cercle, vu en direction axiale, **caractérisée en ce que** l'élément (6) a une forme de nez (6) s'étendant en direction radiale et ayant une coupe transversale de profile contre-dépouillé et **en ce que** l'engagement positif axiale est obtenu par un engagement du contre-contour (7) dans le contre-dépouillé ou les contre-dépouillés.

13. Armature de connexion (3, 4) selon la revendication 12, **caractérisée en ce que** les deux composants d'armature (3, 4) ont une coupe transversale identique, vu en direction axiale.

14. Armature de connexion (3, 4) selon l'une des revendications 12 ou 13, **caractérisée en ce que** la coupe transversale de profile du nez (6) a une forme d'une queue d'aronde.

15. Armature de connexion (3, 4) selon l'une des revendications 12 à 14, **caractérisée en ce que** la largeur de la coupe transversale du profile augmente à partir de la pointe du net (6) vers la racine du nez, et particulièrement que son hauteur est au même temps constante.

16. Armature de connexion (3, 4) selon l'une des revendications 12 à 15, **caractérisée en ce que** la pointe du nez (6) est aussi contre-dépouillée, et comporte particulièrement une contre-dépouillé identique à celui de la coupe transversale du profile du nez (6), et **en ce que** le contre-contour (7) du deuxième composant d'armature (4) est formé pour l'engagement dans ce contre-dépouillé.

17. Armature de connexion (3, 4) selon l'une des revendications 12 à 16, **caractérisée en ce que** la pointe du nez (6) est arrondie, particulièrement qu'elle a la forme d'un segment d'un cercle, particulièrement d'un demi-cercle.

18. Armature de connexion (3, 4) selon l'une des revendications 12 à 17, **caractérisée en ce que** la largeur de la coupe transversale du nez (6) augmente disproportionnellement dans la section de la racine du nez (14), vu dans la direction à partir de la pointe du nez vers la racine du nez (14), en comparaison avec la section entre la pointe du nez et la racine du nez (14).

19. Armature de connexion (3, 4) selon l'une des revendications 12 à 18, **caractérisée en ce que** les composants d'armature (3, 4) sont fabriqués d'un matériau semi-fini par découpage en forme, particulièrement d'un matériau d'une barre de métal extrudé ou tiré, particulièrement d'une barre ronde d'aluminium.

20. Connexion entre une poutre en bois (1) et une structure portante (2) en bois, fabriquée avec la méthode selon l'une des revendications 1 à 11.

21. Utilisation de la méthode selon l'une des revendications 1 à 11 pour la connexion d'une poutre en bois (1) avec une structure portante (2) en bois, particulièrement pour la connexion mutuelle de deux poutres en bois (1, 2).
